# EUROPEAN PATENT APPLICATION

(11) **EP 0 660 100 A2**
(43) Date of publication of application: **28.06.1995**
(21) Application number: 94600011.4
(22) Date of filing: 08.12.1994
(51) Int. Cl.: G01N 3/18, G01N 3/10, G01N 3/02

(54) **Specimen design for uniform triaxial tensile stress-strain distribution under high/low temperatures**

(30) Priority: 10.12.1993 GR 93100503
(71) Applicant: INSTITUTO MICHANIKIS YLIKON KAI GEODOMON A.E., GR-152 36 Penteli, Athens (GR)
(72) Inventor: Michelis,Paul, GR-152 36 Penteli (GR)

(57) **Abstract**

The present invention deals with the geometric configuration of a metallic specimen in order to achieve uniform distribution of stresses-strains in its interior during triaxial tensile material tests. In addition, this invention includes the development of a specimen heating technique adapted to the proposed geometric configuration and capable of attaining high temperatures (up to 1300° C) during the testing procedure. The proposed geometry consists of regularly spaced thin prismatic columns (pin) and fins that emanate from each side of the cubic specimen body (drawing 1,2,3). An extra thin heating element (wire covered by ceramic tape) is wound along the gaps between the pins and fins and covered by a boron nitride layer (drawing 3). Suitable design of the grips contributes to temperature uniformity (drawing 4). Representative triaxial tensile tests prove the functionality and efficiency of the proposed configuration.

## Description

The present invention refers to the geometric configuration of a metallic specimen that, when subjected to triaxial tensile tests, ensures the development of a uniform stress - strain distribution in the test section even in the case of large material deformation. In addition, this invention refers to the development of a technique, adapted to the proposed specific geometric configuration, in order to heat the specimen to temperatures reaching 1300° C during the tensile tests. The major scientific and technical fields related directly with the invention include Mechanics of Materials, Technology and Strength of Metals and Alloys, and Material Testing Procedures.

In the field of Experimental Mechanics there exists no related machine / device available in the market and capable of realising such tensile fatigue tests, despite the fact that the stresses which develop under realistic loading conditions in materials are multiaxial and their effects on the design of structures can be very significant. The main reason for the observed lack of such devices worldwide relates to an objective difficulty of designing a proper specimen configuration in a way that the exerted (to all three spatial directions) tensile loads (via suitable grips) develop uniformly distributed stresses / strains in the specimen, a necessary condition for deriving useful conclusions from the tests. The situation worsens when the specimen undergoing the loading exhibits large deformation. The modern technological needs for high temperature (up to 1500° C) material testing impose further design problems as they require relatively uniform temperature distribution in the specimen test section.

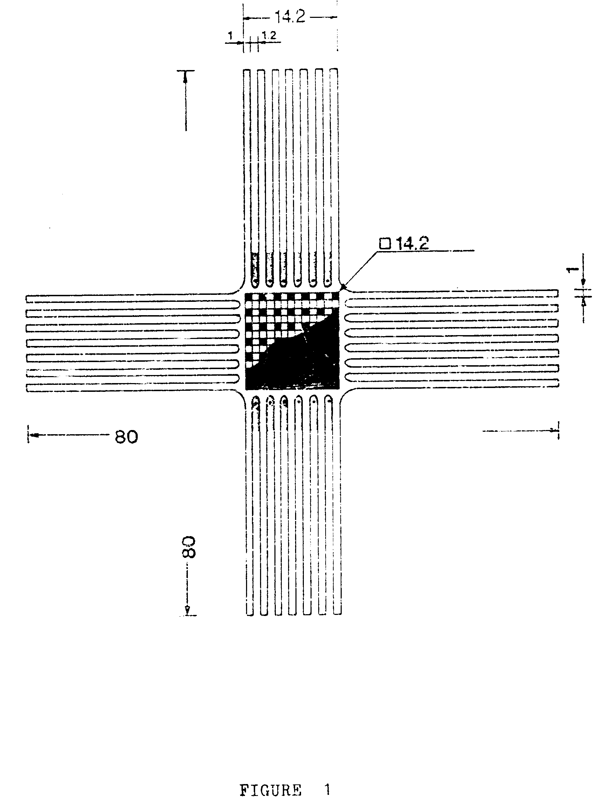

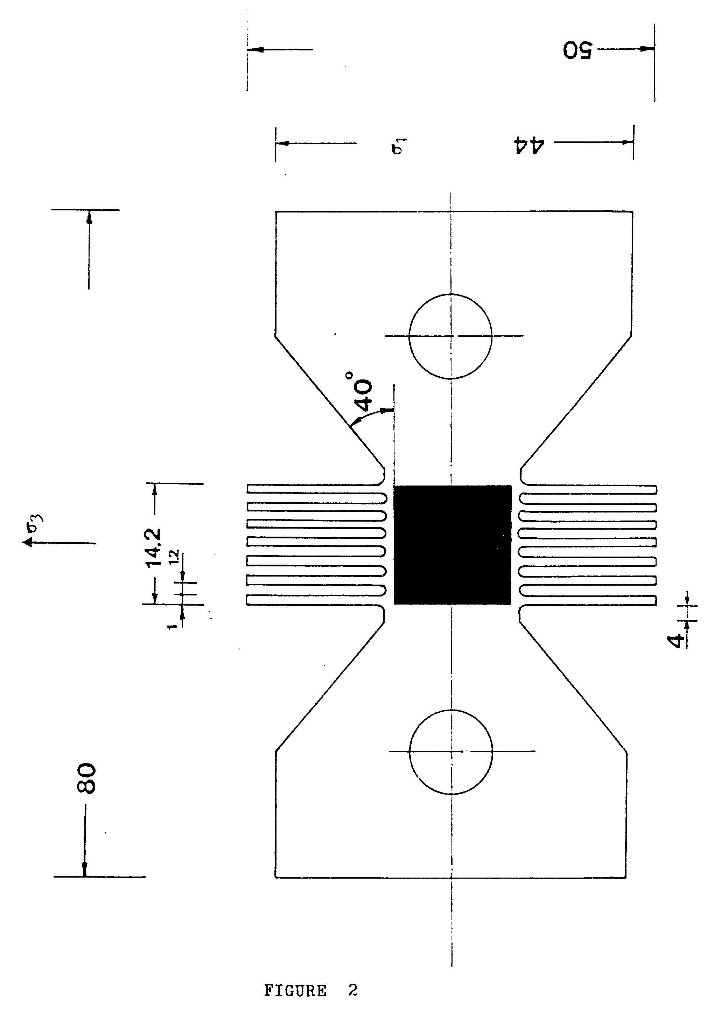

The invention concerns the development of a specific geometric configuration of the specimen and a corresponding heating technique such that the above requirements are met. Specifically, following the examination of several geometries with the aid of intensive numerical simulations based on finite elements, the configuration shown in drawings 1, 2 and 3 has been selected. It is characterised mainly by the existence of thin, regularly positioned, pins and fins emanating from every side of the main (cubic) body of the specimen. These elements (pins and fins) comprise the connecting structure between specimen and grips. The relevant dimensions shown in the drawings refer to a specimen of 14.2x14.2x14.2 mm³ and may vary depending on the actual size of the specimen's main body. The attained uniformity is proven by representative calculations of σ₁ and σ₂ stresses for the system specimen - grips (external load F₁ = 2F₂), that were performed using a three - dimensional finite element code. It becomes evident that the stresses do not reach their maximum values at the specimen boundaries, a significant observation for the reliability of the system. The overall variation of stresses, although clearly different than zero, falls into the generally accepted limits for laboratory applications.

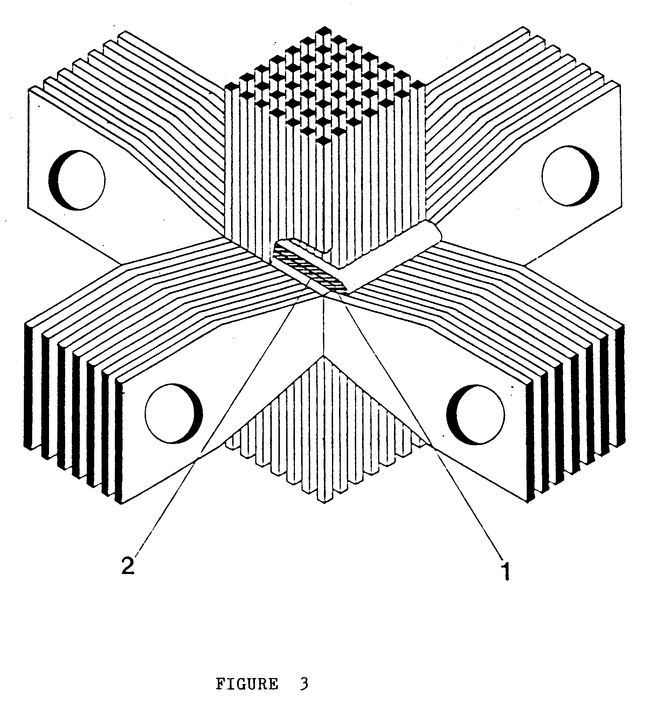

Turning to the heating aspects, the proposed technique involves the use of an extra thin wire (resistance) that is carefully wound around the σ₂ and σ₃ sides of the specimen body along the gaps left between the pins and fins of the gripping structure. The heating element is a Cr - Ni wire {1} 0.3 mm in diameter, which is covered by ceramic tape {2} (drawings 1, 3) for better electrical insulation. The ceramic tape has been immersed in boron nitride to improve its thermal conductivity. A thin layer of ceramic glue has been applied along the edges of the cubic specimen body to achieve better thermal contact of the heating wire and avoid undesired deformation of the wire. Local overheating of the wire, due to inefficient heat transfer to the specimen, is also avoided. The ceramic glue used is thermally conductive, resistant to high temperatures and based on silicon dioxide (SiO₂). The overall system (wire, ceramic tape and glue) is finally covered by a boron nitride layer for better insulation from the ambient and more efficient fixing during temperature variation and load application.

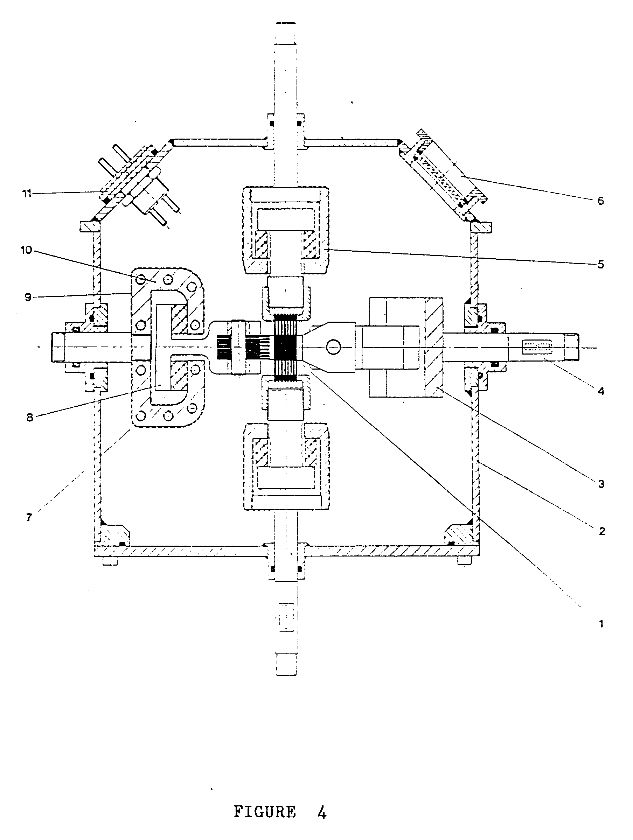

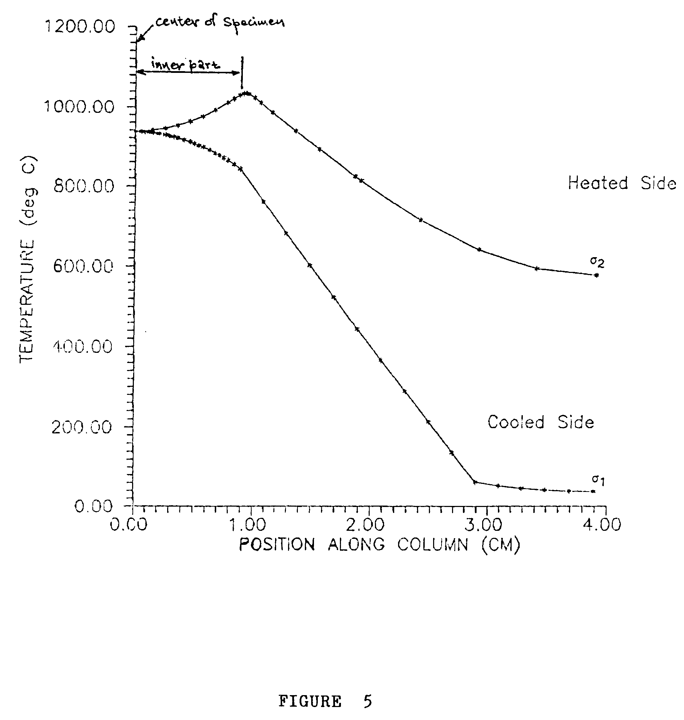

The attained temperature uniformity depends essentially on the overall grip design as they impose the relevant boundary conditions. As shown in drawing 4, alumina silicate plates are inserted suitably in the grip structure (between the different metallic rods) in order to reduce heat losses. To obtain a quantitative estimation of the temperature variation inside the specimen body, experimental measurements and numerical calculations have been performed. The required power input and the resulting temperature distribution under various boundary conditions (cooling at the σ₁ grip edge, partial insulation of σ₂, σ₃, etc.) were investigated using a three - dimensional finite difference code. Typical results for the case of specimen temperature of 950° C are included in drawing 5, where the temperature values along σ₁ and σ₂ in steady state are shown for heat losses estimated by using a coefficient of 1 W/cm² °C.

The experiments done to verify the functionality and durability of the heating system and the insulators and to measure the uniformity of temperature, took place by letting the system to reach steady state at temperatures of 600°C for hundreds of hours. No particular operational problems were observed with the required power of 110 W, while the temperature variation in the specimen body was of the order of 3%.

The specimen configuration as described above, with the grips and heating system, was used in a special device designed to apply σ₁, σ₂ and σ₃ stresses and allowing observation of the specimen, with quite satisfactory results. More specifically, the following summarize the advantages of the present geometric configuration and heating technique :
1. Application and control of three different principal tensile stresses (σ₁ > σ₂ > σ₃ ≠ 0) under normal and high temperature (950° C) for short or long time periods.
2. Adequately uniform distribution of stresses - strains inside the specimen body.
3. Adequately uniform temperature distribution inside the specimen body.
4. Possibility for visual observation (especially for the edges of the cubic body) which enables the measurement of deformation and recording of microcracking activity.

## Claims

1. Method of geometrically configuring a metallic specimen, in order to achieve uniform stress-strain fields in its interior when subjected to triaxial tensile loading, characterised by the presence of regularly spaced, thin pins and fins emanating from each side of the cubic 5. body of the specimen.

2. The method of claim 1 further comprising the step of heating the specially configured specimen by winding a thin heating wire, covered by ceramic tape, around the sides of the cubic body of 10. the specimen and along the gaps left between the pins and fins of each side ; a ceramic glue is also applied along the edges of the specimen's cubic body.

3. The method of claim 2 furhter comprising the step of covering the 15. heating element (wire) by a boron nitride layer for better insulation, fixation and contact with the specimen body.
